Europäisches Patentamt

(19) **European Patent Office**

Office européen des brevets

(11) Publication number: **0 082 989**
**A1**

## (12) EUROPEAN PATENT APPLICATION

(21) Application number: **82111214.1**

(22) Date of filing: **03.12.82**

(51) Int. Cl.³: **B 01 D 53/34**
**F 01 N 3/08**

(30) Priority: **07.12.81 IT 8498581**

(43) Date of publication of application:
**06.07.83 Bulletin 83/27**

(84) Designated Contracting States:
**AT BE CH DE FR GB LI NL SE**

(71) Applicant: **Menini, Alberto**
**Via Della Torre 37**
**I-37100 Verona(IT)**

(72) Inventor: **Menini, Alberto**
**Via Della Torre 37**
**I-37100 Verona(IT)**

(74) Representative: **Modiano, Guido et al,**
**MODIANO, JOSIF, PISANTY & STAUB Modiano &**
**Associati Via Meravigli, 16**
**I-20123 Milan(IT)**

(54) Method and apparatus for removing lead compounds from the exhaust gases of internal combustion engines.

(57) The invention concerns a method and an apparatus for removing lead compounds and other harmful compounds by chemisorption from the exhaust gases of an internal combustion engine.

The method comprises filtering of the exhaust gases and concurrent chemisorption of lead by reactants which are contacted with the exhaust gases over a very large surface area provided by a coating of filler materials which act as supports for the reactants.

The apparatus for implementing the above method comprises a filter system (6) mounted on the exhaust pipe (11) of an engine, the filter delimiting labyrinth paths for the gases effective to contact the latter with substances which are adapted to absorb the lead contained in the gases by chemical reaction therewith.

FIG.4

EP 0 082 989 A1

COMPLETE DOCUMENT

This invention relates to a method of removing lead compounds from the polluting exhaust gases generated or released by internal combustion engines, as well as to an apparatus for implementing said method.

As is known, the antiknock value of gasoline is increased through the addition of antiknock components. Among the latter, lead-based additives are prominent. Through special treatments and refining processes, it is nowadays technically feasible to produce low-lead gasolines while retaining the same octane number. It is also possible to utilize antiknock products comprising methyl-tertiarybutyl ether which, however, besides cost problems, afford poor results. In all cases, the production of low-lead gasoline results, for a given antiknock value , in a lower oil energy output, and is more expensive.

The maximum lead content allowable in normal grade gasoline, in force from January 1, 1978, has been set in many countries at 0.15 g/l. Furthermore, it is anticipated that in a not too distant future the lead content of premium gasoline will also be lowered from the previous rate of 0.40-0.45 g/l down to 0.15 g/l. Up to now, however, complete elimination of lead from gasoline does not seem to provide a rational solution to the ecological problem of environment protection. In practice, a lead-free gasoline having the required antiknock property is not available yet.

0082989

To retain the evident technical and economical advantages afforded by the provision of lead in gasoline, while enabling the adoption of effective environment protection measures, it has been already proposed of attenuating the harmful consequences of exhaust gases through the use of filters. However, as pointed out by J. Kolar in "Zeitschrift Verkehr und Technick"(Technical & Business Review), Issues No. 6, p. 207-211, and No. 7, p. 278-282, under the title "Clean Air in People Public Traffic", it is comparatively difficult to accomplish a numerical determination of a synthetic evaluation criterion relatively to exhaust gas emissions.

It is recognized that the hourly emission of one ton of carbon monoxide is, for example, far less harmful than that of one ton of lead.

Moreover, 3,4-benzopyrene — a highly cancerogenous product — is by several orders of magnitude more harmful than lead itself. The determination of harmfulness is set at top allowable. limit values for air polluting materials, viz. at maximum concentration (MC) values provided by the regulations of many countries, according to which lead is regarded as over 1,000 times more harmful than carbon monoxide. In view of the different degrees of dangerousness of air polluting materials, the need is felt for the adoption of a Harmfulness Number representative of the ratio of the maximum concentration value, e.g. of sulphur dioxide, to the maximum concentration value of the substance in question. Thus, if on such a scale, sulphur dioxide is assigned a harmfulness number of 1, lead, for example, will locate itself at 71.5, as shown in the Table here below.

### TABLE

Harmfulness Number values for the materials which are mostly responsible for air pollution:

| Polluting material | Formula | Harmfulness Number value |
|---|---|---|
| Carbon monoxide | $CO$ | 0.05 |
| Sulphur dioxide | $SO_2$ | 1.00 |
| Hydrofluoric acid | $HF$ | 10.00 |
| Hydrochloric acid | $HCl$ | 0.25 |
| Lead | $Pb$ | 71.50 |
| Nitrogen oxide | $NO_x^+$ | 0.60 |
| 3,4-benzopyrene | $C_{20}H_{12}$ | $5 \times 10^5$ |
| Aldehyde | $R-CHO$ | 4.20 |
| Soot | – | 1.00 |
| Inorganic dust | – | 0.33 |

+ $1 < x < 2$

From the tabulated data, it may be noted that among the main air polluting components in exhaust gases lead, besides benzopyrene, is by far the most harmful. It may be further concluded from the Table that, as far as harmfulness of the exhaust gases is concerned, a major role is played by the rate of 3,4-benzopyrene emission. Although the published information on the amount of 3,4-benzopyrene emission is quite scanty and partly contradictory, it may be inferred from the emission values made available thus far that the Diesel engine, as far as the emission of benzopyrene is concerned, is considered to be more disadvantageous than the gasoline engine. Benzopyrene is partly present along with oil mist and soot, in the form of a substance suspended in the exhaust gases.

Attempts made up to now at removing polluting gases from the exhaust gases of internal combustion engines through the use of filters have proved unsatisfactory in that they have significant limitations, not the least of which is that the filtering devices are excessively bulky. Furthermore, owing to the restriction or necking-down created by the provision of the filter on the exhaust pipe, the engine output is drastically reduced, the restrictive effect growing with time proportionally with the increase of the sooty deposits within the filter itself.

Thus, for example, the proposals are worth mentioning by Masterstock and Reuter who, in Issue No. 126, 1959, of the periodical "Deutsche Kraftfahrt-forschung und Strassenverkehrstechnik" (German Motorization and Traffic Engineering Research), under the title "An Investigation on the Reduction of Harmful Products in Exhaust Gases through the Use of Filters", p. 18-25, diclosed a filter method which exploits the filtering effect of pumice (meerschaum).With that method, the filter has been made to absorb about 50 percent of the lead compounds contained in the fuel. However, on account of its inadequate reproducibility and of the overwhelming technical problems it brings about, that method has failed to gain widespread acceptance.

It is a primary object of this invention to provide a method and an apparatus which make it possible to obtain a substantial reduction of the lead concentration as well as other harmful compounds in the exhaust gases of internal combustion engines by filtering such gases. Gas filtering enables the achievement of both direct and indirect advantages: first of all, the removal of lead from the exhaust gases, that is from the outside environment, which constitutes by itself a significant advantage. As previously pointed out, conventional means and methods for partly replacing lead in gasoline are all uneconomical. By converse, the retention, or possible increase, of lead concentration in gasoline makes it possible to achieve a higher output and, hence, energy saving.

A higher energy output, i.e. a reduction in the amount of fuel expended, in all cases results in improved combustion, that is a lower concentration of hydrocarbons as well as a reduction of soot and oil mist in the exhaust gases. In the particular case of gasoline engines, thanks to the filtering out of lead, also decreased is the specific emission of benzopyrene. With the gasoline engine, the entrainment of benzopyrene in soot and oil mist is considerably lower, which reflects in an increased yield from the fuel employed.

Lead removal by filtering is also advantageous
as regards any after-combustion catalysts placed
downstream of the filter for lead, because such
catalysts would then enjoy a longer life. In that
context, the filtering of lead exerts, albeit
indirectly, a favorable action on the possibility of
reducing other harmful products. Finally, it should
not be forgotten that lead absorbing filters also
have a substantial noise deadening effect on the engine.

In accordance with a first aspect of the instant
invention, a method of removing lead and other harmful
compounds from the exhaust gases of an internal combustion
engine, which method comprises the step of conveying the
exhaust gases from the engine along a winding path, whereby they are exposed to a very large surface area of a
reactant comprising either phosphate, sulphate, or
sulphide compounds of alkaline and/or alkaline-earth metals
or iron metals, while their velocity is concurrently
slowed down, and the lead in the exhaust gases is subjected to chemisorption by the reactant.

Advantageously, the reactant is in the form of
a coating comprising a plurality of filler or support bodies.

According to a further aspect of the invention,
an apparatus is provided for implementing the above
method of removing lead from the exhaust gases of
an internal combustion engine, which apparatus comprises a
filtering chamber having an inlet port communicating
to the engine exhaust pipe and an outlet port, and
delimiting an inside opening (i.e. total free cross-
section of the gas stream) much larger than either
the inlet or outlet ports, and a plurality of filler or support bodies coated with a reactant and randomly arranged within the chamber such as to define plural tortuous paths designed to split, in use, the exhaust gas flow, so as to force the exhaust gases to contact said reactant over a large overall surface area.

Advantageously, said chamber is defined within a conduit or duct of cyclone configuration.

It has been found, in particular, that the bulk and restriction effect of a filter system may be significantly attenuated by causing the lead compounds contained in the exhaust gases to be absorbed by chemical reaction with active materials provided in the filtering system. The chemical reaction is promoted, and accordingly accelerated, if the surface area of the reactive materials present in the filter chamber is significantly increased through the utilization of filler or support materials for the active reactants. Such supports allow an unobstructed flow of the exhaust gases, but force the latter to follow labyrinthical paths through the filtering system.

Advantageously, the filtering chamber cross-section increases from the inlet to the outlet end, thus favoring to the utmost the outflowing of such gases.

It has been found convenient to employ, as reactants, phosphate, sulphate, and sulphide compounds of alkaline and/or alkaline-earth metals or of iron sulphide.

It is a known fact that the thermal decomposition of lead sulphate is initiated at approximately 970°C, so that the application of the active material or reactant onto the support or filler bodies, where said active material comprises for instance Glauber salt ($Na_2SO_4 \cdot 10H_2O$), a byproduct of the manufacture of artificial silkin spinning baths, may occur at 40 to 50°C, thus producing calcification of the salt in accordance with any suitable method. The adherence of sodium sulphate to iron or ceramic bodies is also good in the event that such bodies are swept by fast gaseous streams.

Moreover, the reaction rate of sodium sulphate compounds with lead compounds, above 500°C, is adequate for the purposes of this invention.

As regards instead the main properties of the phosphatic compounds, some hints can be found, for example, in the inorganic chemistry textbook by Gmelins (Verlag Chemie GmbH, Weinheim, 1970, vol. 47), as quoted herein below. The phosphatic compound of lead which is most stable at ambient temperature has the formula $PbHPO_4$. Above 180°C, the phosphatic compounds take less clearly definable forms, such as $Pb_3P_4O_{13}$. From a consideration of the $PbO-P_2O_5$ phase diagram, it may be noted that the $P_2O_5$ content in this chemical system can vary within a range from 0 to 40 moles percent. Among others, there occurs the formation of pyromorphite having the formula $Pb_5Cl(PO_4)_3$, where lead appears in the form of chloride compounds, as is generally the case in the exhaust gases of internal combustion engines.

Bearing in mind that the reaction variables are highly complex, the characteristics of sodium phosphate have been investigated experimentally directly in the exhaust gases, downstream of the cylinders. It has been found, for example, that sodium phosphate reacts very quickly with the lead contained in the exhaust gases, on condition that sodium phosphate is in the form of a coating applied over filler or support bodies of iron, steel, or ceramics, having a large surface area. It has been also found that one unit by weight of trisodium phosphate $(Na_3PO_4)$ can absorb chemically at least 1.5 units by weight of lead.

To prevent the accumulation within the filter of large amounts of soot in the form of inclusions, it is provided for the filtering structure comprising the support bodies and voids therebetween, to delimit a wide and easily gone through labyrinth of paths, thanks to the filtering zone having a considerably larger opening than the inlet pipe from the engine.

The method of this invention, therefore, involves the contacting of the exhaust gases of an internal combustion engine with a large surface area by splitting the exhaust gas flow into a plurality of multiple gas streamlines which are forced to follow a tortuous path, and the chemical absorption of the lead compounds (such as $PbCl_2$) present in the exhaust gases through the use of active chemical compounds arranged to form the coating of a plurality of filler or support bodies, thereby a labyrinth of paths is formed which are delimited by the active chemical compounds.

Some embodiments of an apparatus for implementing the method according to this invention will be described below with reference to the accompanying drawings, in which:

Figure 1 is a schematical plan view of a cyclone filtering apparatus with its cover taken away;

Figure 2 is a sectional view taken along the line II-II of Figure 1;

Figure 3 is a sectional view taken along the line III-III of Figure 1; and

Figure 4 is a cross-sectional view of a further embodiment of the filtering apparatus according to the invention.

The exhaust gases issueing from an internal combustion engine are directed through an inlet pipe 1 into a filter apparatus , generally indicated at 2 and being in the form of a cyclone. The apparatus 2 is charged on its interior, for example, with iron chips or steel turnings coated with dodecahydrate sodium phosphate ($Na_3PO_4.12H_2O$). Dodecahydrate sodium phosphate can be calcined on the support either in use by utilizing the heat from the engine exhaust gases, or through a suitable preliminary thermal treatment. The drawings do not show the filtering materials and/or filler materials on the apparatus inside. The latter has an outlet conduit 3, which is located at the periphery of the cyclone. Advantageously, the ratio of the opening or cross-sectional area of the inlet pipe 1 to the cross-sectional area of the apparatus 2 is approximately equal to 1:10, to facilitate the gas flow through the apparatus 2. The cyclone 2 has a cover 4 which can be secured by means of screws 5. After removing the screws, access can be had to the interior of the cyclone apparatus, such as may be required to replace the active and filtering material as the latter is spent.

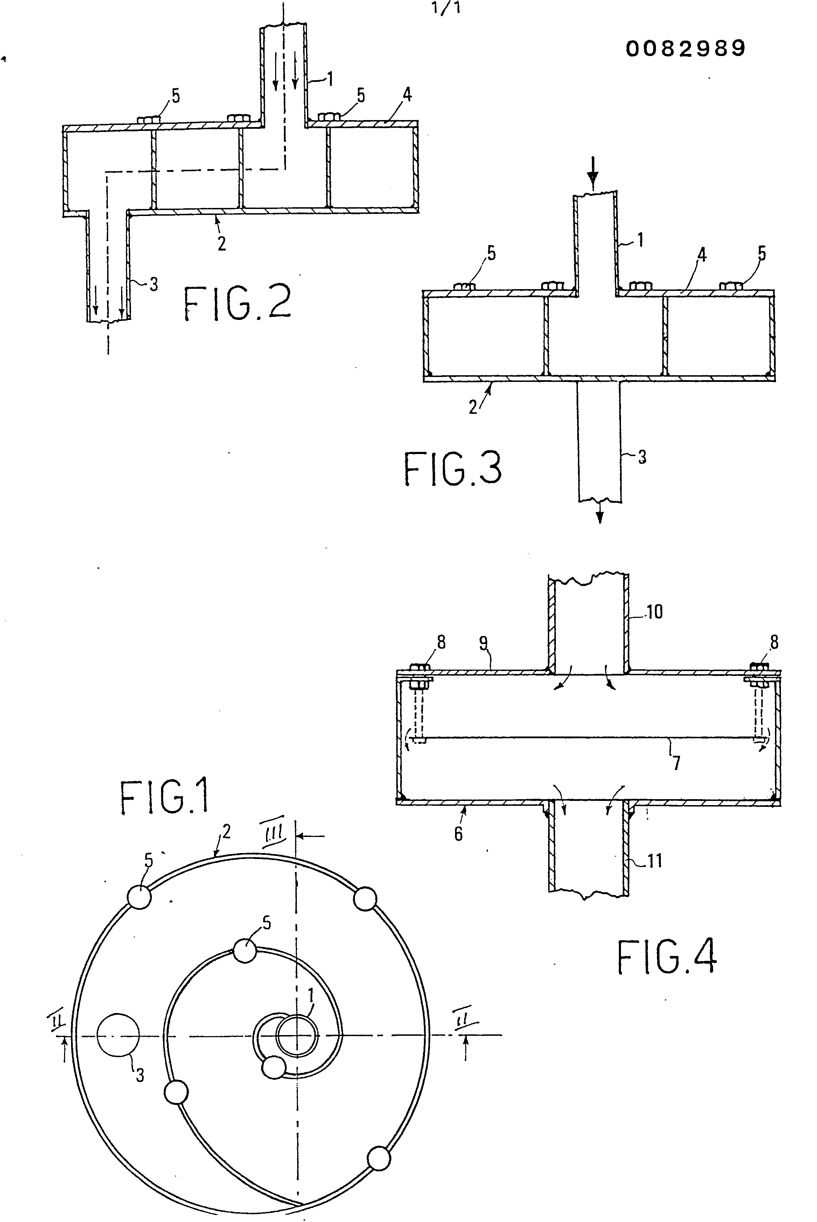

In the embodiment shown in Figure 4, the filtering apparatus is indicated at 6 and comprises a drum-like body the interior whereof is divided into two halves by a partition 7, e.g. held in position by screws 8 which also serve to secure the cover 9. The apparatus 6 has a central aperture for connection to an inlet conduit 10 on one end, and a second central aperture on the opposite end for connection to an outlet or discharge conduit 11. The exhaust gases issueing from the engine are caused to flow through the pipe 10 concentrically into the drum-like body 6 and to circulate radially, at first at a low velocity and then at a higher velocity until they reach the exhaust pipe 11. Inside the body of the apparatus 6 there are, of course, provided bodies coated with an active material, which bodies function as input gas flow filtering and dispersing elements, as well as supports or carriers for the active reactants which cause the lead compounds of internal combustion engines to be absorbed chemically.

## EXAMPLE 1

The drum 6 of an apparatus as illustrated in Figure 4 has been loaded with iron chips. The iron chips had a weight of 0.8 Kg., confined in a volume of about 5 l. and the weight of the trisodium phosphate was approximately equal to 1 Kg. This charge was sufficient for the consumption of 3 $m^3$ of premium gasoline having a 0.44 g/l lead content. The activity of the filter thus obtained did not depend in practice on the rpm or operating characteristics of the engine. In the situation just described, an amount of lead present in the gasoline utilized was absorbed chemically which was approximately equal to 80 percent. Furthermore, the filter also absorbed a large amount of soot. However, the amount of soot will largely depends on the engine operation. Moreover, the engine operation, does not affect the amount of lead present in the exhaust gases and absorbed chemically.

It has been found that during the periods of inactivity, following a working phase of the filtering system, the active materials contained in the filtering system trap water from the environmental air, and during the activity periods they partly trap it from the engine exhaust gases. This results, at least in the Applicant's opinion, from the active material (e.g. $Na_3PO_4.12H_2O$) losing, specially at high temperatures, wholly or in part its water of crystallization, thereby it is forced to trap it from the environmental atmosphere, especially at the lower temperatures. This process ensures the regeneration of the active materials present, in the form of a coating on the supports or carriers, within the filtering system, thus extending the service life of the filtering system. In fact it has been found that during the out-of-work period of the system, there occurs a migration of active reactant toward the outer surface swept by the exhaust gases, and oné of contaminants toward the interior of the active compound.


EXAMPLE 2

Chemisorption occurred in an apparatus as shown in Figs. 1 to 3 in which tripolyphosphate having the formula $Na_5P_3O_{10}$ was used as a reactant. The reactant in a porous, rough-grained and calcinated state was placed in a cyclon apparatus 2. The reactant granules had size ranging from 4 to 8 mm. The total initial reactant weight was 2.5 kg and used for the consumption of about 8 $m^3$ of "super" gasoline, i.e. gasoline containing at least 0.44 g of lead per litre. This reactant was not as good as that employed in the Example 1 since a plugging action for the exhaust gases occurred to a certain extent in the exhaust pipe, which results in a decrease of the engine efficiency. Such an efficiency decrease was found to be about 8-15% depending upon the mileage of the engine as well as the amount of gasoline consumed during the test.

Accordingly, the reactant described in this Example can be satisfactory only with moderate specific gasoline consumption, i.e. provided the gasoline consumption does not exceed 8 litres per hour.

## EXAMPLE 3

Chemisorption was tested as detailed in Example 2 in which iron bisulphide ($FeS_2$) was used as chemisorbant in the state also described in Example 2. The total reactant weight was 6.5 Kg. that covered the consumption of more than 20 $m^3$ of "super" gasoline. Plugging phenomena occurred only after consuming about 12 $m^3$ of gasoline practically irrespective of the engine mileage.

## EXAMPLE 4

Chemisorption was tested in a drum 6 of Fig. 4, while using potassium phosphate having the formula $K_3PO_4$ as a reactant. The drum 6 was filled with turnings as in the Example 1. The weight of the turnings was about 1 Kg, whereas that of the potassium phosphate after calcination was 1.3 Kg. These amounts were used for consumption of 3 $m^3$ of "super" gasoline. No worsening of the working parameters with time nor plugging effect even at greater mileage figures occured.

A considerable advantage in using potassium phosphat instead of sodium salt is to be found in that stronger cohesion is created between reactant and turnings to which the reactant adheres well.

## EXAMPLE 5

Chemisorption was tested as illustrated in the Examples 1 and 3 in a drum 6 in which calcinated gypsum

(calcium sulphate: $CaSO_4$) was employed as a reactant. The reactant was in rough-grained state as in the Example 2, the granules having a length of about 5-10mm. The total initial weight was 6 Kg and used for consumption of 10 $m^3$ of gasoline with a lead content of 0.5 g/l. Gypsum and in general calcium compounds, are much cheaper than potassium salts. However, gypsum had the tendency of producing plugging effect, i.e. of reducing the engine efficiency. Moreover, its adhesion to the carrier was weaker than that of the phosphate salts.

As the filtering system of this invention is also capable of effectively withhold soot, it has proved effective also as a benzopyrene absorption means, benzopyrene appearing mainly in the soot and oil mist. Thus, the filtering system of this invention also lends itself to the filtering of the exhaust gases emitted by Diesel engines.

Finally, the lead withheld by the inventive filtering system may be recovered, such as through any of several methods well known in the art, e.g. a metallurgical method wherein the organics associated with the lead in the filter are burned off.

The invention so conceived is susceptible to many modifications and variations, without departing from the protection scope and spirit of the inventive concept.

CLAIMS

1. A method of removing lead and other harmful compounds from the exhaust gases of an internal combustion engine, which method comprises the step of conveying the exhaust gases from the engine along a winding path, whereby they are exposed to a very large surface area of a reactant comprising either phosphate, sulphate, or sulphide compounds of alkaline and/or alkaline-earth metals or iron metals, while their velocity is concurrently slowed down, and the lead in the exhaust gases is subjected to chemisorption by the reactant.

2. A method according to Claim 1, characterized in that said reactant is in the form of a coating applied over a plurality of filler or support bodies.

3. A method according to Claim 1, characterized in that the reactant is in the form of rough-sized granules.

4. An apparatus for implementing the method according to Claim 1, characterized in that it comprises a filtering chamber (2,6) having an inlet port (1,10) communicating to the exhaust pipe of the engine and an outlet port (3,11), and delimits an inside opening much larger than either the inlet port or outlet port; and a plurality of filler or support bodies coated with a reactant and randomly arranged within the chamber such as to define a plurality of winding paths effective, in operation, to split the exhaust gas flow, thereby the latter are forced to contact a large overall surface area of the reactants.

5. An apparatus according to Claim 4, characterized in that said chamber (2,6) is delimited within the conduit or trough having a cyclone configuration.

6. An apparatus according to Claim 4, characterized in that said filler or support bodies comprise iron.

7. An apparatus according to Claim 4, characterized in that said filler or support bodies comprise steel or iron.

8. An apparatus according to Claim 6, characterized in that said filler or support bodies comprise iron chips or steel chips or turnings.

9. An apparatus according to Claim 4, characterized in that said filler or support bodies comprise ceramics.

10. An apparatus according to Claim 4, characterized in that the filler or support bodies comprise rough-sized reactant granules or a porous structure.

0082989

FIG.2

FIG.3

FIG.1

FIG.4

European Patent Office

# EUROPEAN SEARCH REPORT

0082989
Application number

EP 82 11 1214

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | DD-A- 97 920 (F. RIEGER et al.) <br> * Claims 1, 2 ; column 4, lines 17-23 ; figures 1, 2 * | 1,4 | B 01 D 53/34 <br> F 01 N 3/08 |
| Y,A | US-A-3 227 659 (J.T. BRANDENBURG et al.) <br> * Claims 1-3 ; column 2, lines 22-32 ; column 4, lines 36-57 ; example 1 * | 1-4,6, 7,9,10 | |
| A | US-A-3 857 921 (N. TAMURA et al.) <br> * Claims 1-3 ; column 6, lines 40-45 * | 1-3 | |
| A | US-A-3 817 715 (LE ROY F. GRANTHAM) <br> * Claim 1 ; column 3, lines 51-57 * | 1-3 | TECHNICAL FIELDS SEARCHED (Int. Cl. 3) <br><br> B 01 D 53/00 <br> F 01 N 3/00 |

The present search report has been drawn up for all claims

| Place of search | Date of completion of the search | Examiner |
|---|---|---|
| BERLIN | 01-03-1983 | BERTRAM H E H |